# EUROPEAN PATENT APPLICATION

(11) **EP 2 712 949 A1**
(43) Date of publication of application: **02.04.2014**
(21) Application number: 13186946.3
(22) Date of filing: 01.10.2013
(51) Int. Cl.: D04H 1/02, B32B 5/26, C09K 3/32, D04H 1/04, D04H 1/425, D04H 1/4274, D04H 1/541, D04H 1/72, D04H 5/06

(54) **Nonwoven product for use as industrial absorbent with cotton ginning byproducts and dual-layer scrim**

(30) Priority: 01.10.2012 US 201213633050
(71) Applicant: Sellars Absorbent Materials, Inc., Milwaukee, WI 53223 (US)
(72) Inventor: Perry, William D, Milwaukee, WI Wisconsin 53223 (US); Drapela, David C, Brown Deer, WI Wisconsin 53223 (US)
(74) Representative: Garratt, Peter Douglas

(57) **Abstract**

A product and method of manufacturing a non-woven, industrial hydrophobic absorbent. The absorbent includes a core of cotton ginning byproducts (such as cotton regin) and bicomponent fibers. The cotton regin is processed to create a low-density and, thus, a high-absorbency web. The method includes processing cotton regin to a suitable range of fiber length and particle sizes, mixing the cotton regin with a thermoplastic bonding agent, and depositing the material onto a steadily advancing belt to produce a relatively low density, loosely formed web core. Subsequent processing of the web core in an oven softens or melts the bonding agent, thereby adheres it to other web material to give the web core desired strength and integrity. At least one, dual-layer, continuous, air-permeable scrim is secured or bonded the core to provide additional strength and an exterior surface having enhanced grip and non-slip characteristics.

## Description

### BACKGROUND

Industrial absorbents, including hydrophobic industrial absorbents, are used in a variety of circumstances, particularly in manufacturing facilities to absorb oil that may be dispensed, emitted, or leaked from various machines and manufacturing lines.

### SUMMARY

Although current industrial hydrophobic absorbents are functional, absorbents with improved characteristics such would be beneficial. One characteristic that can be important to buyers and users of industrial absorbents is grip. Absorbents are often placed on floors or other areas where they may be stepped or walked on. Absorbents may be placed in such locations in anticipation of unwanted spills or leaks. Regardless of why or when an industrial absorbent is placed on a floor, it is important that the absorbent stay in position in order to soak up the liquid of interest. It is also important from a safety perspective that the absorbent resist moving in response to a person walking or stepping on the absorbent. If the absorbent moves when stepped or walked on, it is possible that the person stepping or walking on the absorbent may slip or fall. Either event could cause the person to be injured or knock into and damage other items.

Hydrophobic absorbents (which are designed to absorb oil and similar liquids as opposed to water) are often made from polypropylene and other petroleum-based polymers. Natural and untreated cotton as well as cotton byproducts are hydrophobic due to the presence of waxes and cotton seed oil. These materials may also be used to manufacture a hydrophobic absorbent. Cotton ginning byproducts, such as "cotton regin," are byproducts from cotton production. Cotton regin may be used in absorbents and is relatively inexpensive and offers environmental benefits because it is derived from a source of renewable, natural fibers.

During the cotton ginning process cotton fibers are separated from seedpods. During the process, as much as 30% by weight of the harvested seed cotton is removed as waste, including dirt, sticks, leaves, seeds, and cotton motes (fibrous material from which most of the high-grade long cotton fibers have been removed). The cotton motes are offered for sale as a source of low-grade cotton due to the short length and off-color appearance of the remaining fibers. Further cleaning and ginning of the motes produces a short-fiber grade of cotton referred to as cotton regin, or cotton reginned motes. The process of removing the short fiber from the motes or re-ginning the motes results in a further byproduct referred to as cotton pills or cotton reginned pills, typically comprising shorter fibers and a higher debris content than the grade of cotton referred to as cotton reginned motes. All forms of fiber removed from the cotton motes produced as byproducts of the cotton ginning process are hereinafter referred to as "cotton regin." The byproducts of the cotton ginning process are different than the product of that process, which is cotton.

In one embodiment, the invention provides a non-woven product for use as an industrial absorbent. The product includes a non-woven web core. The core includes a first surface, a second surface opposite the first surface, and a mixture of cotton ginning byproducts (such as cotton regin) and bicomponent fibers. Preferably, opened, individuated bicomponent fibers are mixed with the cotton ginning byproducts, and at least some of the bicomponent fibers are thermally bonded to at least some of the cotton regin. Thus, the bicomponent fibers act as the thermal bonding agent. The non-woven product also includes a scrim.

The scrim has a first layer including spunbond, thermoplastic material and a second layer including meltblown material. The first layer of the scrim is adhered or bonded to at least some of the cotton ginning byproducts in the core and to at least some of the bicomponent fiber in the core. The result is a product with greater tensile strength than one without an outer scrim, and one with some degree of scuff resistance on the scrim side. The second layer of the scrim, which is made from meltblown material, is adhered to the first layer. The second layer is positioned outwardly or on an exterior surface of the product and enhances the grip of the product. In particular, the level of grip between the meltblown material and a surface, such as a floor, is greater than a product that, for example, has an outer scrim made only from spunbond material.

Due to its short and inconsistent fiber lengths and its relatively high debris content, cotton regin is unsuitable for many currently available non-woven web forming methods, such as cards or air-laid systems in which the web material must pass through a screen to remove debris and unopened nits of fiber. However, using methods described herein, numerous forms of cotton regin may be processed and formed into an industrial hydrophobic web, which may have higher oil absorbency than similar absorbents made from polypropylene.

In one embodiment of the invention, the core is a dry-laid web that includes chopped cotton regin (preferably having a length between about 1 mm and about 6 mm) combined with individuated bicomponent fibers acting as the thermal bonding agent. The finished product includes a thermally bonded web (or core) of cotton regin and bicomponent fibers, which may be produced with an amount of compression sufficient to ensure web integrity, without causing an undesirable increase in density. Typically, the web's absorbency varies inversely with its physical density. The amount of bicomponent fiber combined with the cotton regin (typically 6% to 12% of total web weight, or, in another embodiment, 8% to 10% of total web weight) is sufficient to obtain the required web strength but is also limited to allow the web to rebound after thermal bonding or compression processes in order to prevent or inhibit excessive loss of bulk.

The hydrophobic absorbent includes a thermally bonded outer scrim on at least one surface. As noted, the scrim has two layers - a first layer and a second layer. The first layer is made from at least one thermoplastic material, which, during the web bonding process, becomes adhered to at least some of the cotton regin and/or some of the bicomponent fibers along one surface of the core. The result is a web with potentially greater tensile strength than one without an outer scrim (depending upon the amount of bicomponent fiber in the web) and one with some degree of scuff resistance on the scrim side.

In still another embodiment, the hydrophobic absorbent includes a thermoplastic outer scrim on both outer surfaces of the core. The result is a web with some degree of scuff resistance on both surfaces and greater tensile strength than a similar web with one or no outer scrim.

In still another embodiment, the hydrophobic absorbent includes a layer of netting material either embedded within, or attached to one surface of the core. The core is produced so as to allow some amount of web material to pass through the open netting during web formation. The netting material thereby becomes embedded to some degree within the web material during the thermal bonding process. The netting material may also consist of at least one thermoplastic material which bonds to the web material during thermal bonding. The result is a web with greater tensile strength than a similar web without netting or a scrim, but with fewer changes to surface characteristics than those associated with the addition of a scrim.

In another embodiment, a method of manufacturing a hydrophobic absorbent web from cotton regin is provided. The cotton regin is opened and sized (reduced to a lengths suitable for web formation) and combined with bicomponent fiber. The processed web material is then transported pneumatically to a chute or reserve section and then metered into a forming head from which it is deposited onto a moving, air-permeable forming wire (or belt). Depositing the web material to form a web includes sprinkling the material over a defined area of the forming belt so as to gradually form a web under the influences of gravity and of an air stream flowing down through the web into a suction box positioned beneath the forming belt. The web is then heated in an oven to cause an outer layer of the bicomponent fiber to melt or soften. The melted or softened outer layer of the bicomponent fiber contacts other fibers and, when re-hardened or cooled, creates bonds.

If the web exiting the oven is inadequately bonded, as indicated by, for example, unacceptably low tensile strength, a tendency to not remain intact when subjected to conditions typical of those for its intended use, or the like, a new web with improved the integrity can be created by, for example, using a higher proportion of bicomponent fiber, increasing the amount of compression on the web either during or after the heating process, or both. Web compression, achieved by passing the web through a compression nip formed between a belt and a roller or between two rollers, can also be employed to increase web density.

The heating process causes at least a portion of the thermoplastic scrim to bond with the web. If a scrim is applied to only one surface, the scrim is typically provided on the top surface of the web before entering the oven or heating section. If a second scrim is applied to the web, the scrim is positioned below the forming head and the web is formed on top of the second scrim.

If a netting material is included in the web, the netting is positioned below the forming head and for some distance above the forming wire such that a portion of the web material falls through the netting during web formation. The netting is then lowered onto the web material that has fallen through the netting, and the netting is thereby embedded to some extent within the web.

These and other aspects of the invention will become apparent by consideration of the detailed description, claims, and accompanying drawings.

### BRIEF DESCRIPTION OF THE DRAWINGS

Fig. 1 is a flow chart illustrating a process of manufacturing a product, such as an absorbent including a hydrophobic absorbent web from cotton regin.

Fig. 2 is a schematic view of the process of Fig. 1.

Fig. 3 is a bottom perspective view of a second product including a web and a scrim and manufactured by the process of Fig. 1.
Fig. 3a is an enlarged view of Fig. 3.

Fig. 4 is a cross-sectional view of the second pad taken along line 4--4 of Fig. 3.
Fig. 4a is an enlarged view of Fig. 4.

Fig. 5 is a bottom view of a third product including a web and manufactured by the process of Fig. 1.

Fig. 6 is a cross-sectional view of the third pad taken along line 6--6 of Fig. 5.

Fig. 7 is a schematic view of a modified process of making any of the illustrated pads.

Fig. 8 is a bottom view of a product including a web and a netting and manufactured by the process of Fig. 1.

Fig. 9 is a cross-sectional view of the pad taken along line 9--9 of Fig. 8.
Fig. 10 is a perspective view of a product including a web and two scrims.
Fig. 10a is an enlarged view of a portion of Fig. 10.
Fig. 11 is a cross sectional view of a product taken along line 11--11 of Fig. 10.
Fig. 11a is an enlarged view of a portion of Fig. 11.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

Although references may be made below to directions, such as upper, lower, downward, upward, rearward, bottom, front, rear, etc., in describing the drawings, these references are made relative to the drawings (as normally viewed) for convenience. Unless specifically indicated, these directions are not intended to limit the present invention in any form. In addition, terms such as "first" and "second" are used herein for purposes of description and are not, unless specifically stated, intended to indicate or imply a specific sequence or relative importance or significance.

### DETAILED DESCRIPTION

In one embodiment, a product, such as an industrial absorbent, includes a hydrophobic absorbent core formed or made from cotton ginning byproducts (such as cotton) regin combined with bicomponent fibers and at least one scrim are secured or bonded to the core. In other embodiments, a second scrim, a netting, or both are incorporated on or within the core. In the description that follow and in the drawings, the term cotton regin is used frequently. It should be understood that unless the context requires the use of cotton regin that the broader category of cotton regin byproducts could be used in place of cotton regin.

The scrim is an air-permeable sheet made of two sheets or layers (i.e., having a laminate structure). The scrim is preferably continuous (i.e., not broken or separated into multiple pieces or lengths) and pre-formed (i.e., both layers of the scrim exist before the scrim is secured or bonded to the core. The first layer of the scrim is made of spunbond material. Most preferably, bicomponent fibers consisting of an inner core of polypropylene and a sheath or outer layer of polyethylene are used to make the first layer. The individuated bicomponent fibers within the core are the same or similar composition (i.e., have an inner core or polypropylene and an outer sheath of polyethylene). The outer sheath of polyethylene has a lower melting point than the core of polypropylene. The second layer of the scrim is made from a different material and provides a more textured or rougher surface that has a higher grip, which helps provide a reduced- or non-slip function for the product while in use. The second layer may be embossed, patterned, or printed for additional non-slip or aesthetic purposes

The outer scrim is heated in an oven while in contact with a surface of the core such that melted or softened polyethylene in the bicomponent fibers of the scrim comes in contact with fibers on a surface of the web. As the web and outer scrim layer or layers cool, the polyethylene in the scrim, as well as in the individual bicomponent fibers within the web, re-hardens to form bonding points with at least some adjacent fibers

Another way to view the outer scrim is that it has a laminate structure or architecture, i.e., the first and second layers mentioned above. The main function of the first layer is to adhere to the absorbent core, while the main function of the second layer is to provide a rough or reduced slip surface for the product while in use. The second layer may be embossed, patterned or printed for additional reduced-slip or aesthetic reasons.

In a particular form, the first layer of the scrim is a spunbond web or sheet of bicomponent fibers and the second layer is a web or sheet of meltblown polypropylene. The two materials are both bonded to each other and to the absorbent core, via the heat of the oven, forming a through-bonded composite product with at least one scrim and an absorbent core. Specific manufacturing processes are described below. The components (the core and two-layer scrim) are heated in an oven and the two layers or the scrim thermally bond to each other and the scrim thermally bonds to the absorbent core, forming a through-bonded composite pad with a thermoplastic outer surface and an absorbent core.

During development of the product, attempts were made to create a product with a single-layer scrim, for example, a scrim of meltblown material only. Also, experiments or trials with different types of meltblown materials were performed. The inventors discovered that meltblown materials did not, in general, adhere to the core of cotton ginning byproducts and bicomponent fiber sufficiently (i.e., so that the scrim would remain secured or bonded to the core when the absorbent was used as intended). It was also determined that meltblown material by itself did not provide sufficient additional strength and integrity to the web, which is one of the main purposes of having a scrim. It was also discovered that a meltblown only scrim was unable to withstand (i.e., would start to break or fall apart) stresses such as person walking on an absorbent with a meltblown only scrim. It was discovered, however, that a layer of meltblown, polypropylene could be adhered to a layer of spunbond bicomponent fibers. The layer of spunbond material adheres to the absorbent core and to the layer of meltblown material.

As noted above, the first layer of the scrim is most preferably made from spunbond bicomponent fibers and the first layer has a thickness of about 6 mils. The second layer is most preferably made from meltblown polypropylene and has a thickness of about 7 mils. The first and second layers (which both comprise layers of polymer materials) have similar melting points. The melting points of each layer are similar to each other and to the melting point of the outer sheath of the bicomponent fiber used in the absorbent core.

The layer of meltblown material is preferably made from polypropylene and it has a higher natural adhesion or grip than the spunbond material. In particular, the inventors have found that the two-layer scrim described herein has (on the meltblown or outer side of the second layer) 1) a static coefficient friction of about 0.430 (as measured under the methodology set forth in ASTM D 1894 for plastic film and sheeting). This coefficient is approximately 20% higher than the static coefficient of friction of a single-layer scrim made solely from spunbond bicomponent fiber. The two-layer scrim also has a kinetic coefficient of friction of about 0.448 (again, under ASTM D 1894), which is about 40% higher than the kinetic coefficient friction of the single-layer scrim. In particular, a single-layer scrim of spunbond bicomponent fiber has a static coefficient of friction of about 0.354 and a kinetic coefficient of friction of about 0.316.

The two layer scrim is air permeable so that air may flow freely during formation of the absorbent core and so that heated air can pass through the web of cotton ginning byproducts and bicomponent fiber when the scrim and core are heated to form the final product. Preferably, the two layer scrim has an air permeability of about 120 to about 240 cfm (cubic feet per minute).

In another embodiment, the absorbent product includes a netting configured with approximately 2 to 5 lines (or threads) per inch is made of plastic which does not significantly soften or melt in the heating section. The netting is retained above a conveyor surface so that some of the web material (the cotton regin and bicomponent fibers) falls through the netting. This enables the netting to be affixed to the web by being (to some degree) embedded within the web material. The web, with embedded netting, is heated in an oven such that melted or softened polyethylene in the bicomponent fibers is in contact with other fibers of the web and/or with the netting. As the web cools, the polyethylene in the individual bicomponent fibers re-hardens to form bonding points with at least some adjacent fibers and/or with the netting.

Certain embodiments of the methods and techniques described herein to manufacture an absorbent product result in finished web core with a relatively high bulk-to-weight ratio of between 25 and 40 mils/osy. A high bulk (low density) helps to achieve a relatively high absorbency of between 20 and 30 times web weight, depending in part on the properties of the absorbed oil.

A high bulk finished product is achieved in part by a method that does not require mechanical compression of the unbonded web material in order to form a web. The forming head sprinkles web material onto a steadily advancing forming belt where it forms a web under no more compression force than that resulting from gravity and the downward flow of air (or suction) through both the web and the forming belt. The air flow is generated by a suction fan, the inlet of which is connected to a suction box positioned beneath the forming belt.

If needed to encourage the formation of bonds between cotton regin and bicomponent fibers, some amount of compression may be applied to the web after being heated in the oven. The compression is typically accomplished by means of an adjustable gap between two rollers. The amount of compression applied varies inversely with the size of the gap, which is adjusted on the basis of the desired strength and density of the web.

The strength and density of the web also tend to vary in relation to the amount of individuated bicomponent fibers in the web. In one embodiment, the web includes about 8% to 12% of staple bicomponent fibers by total web weight, the bicomponent fibers being crimped and approximately ¼" long. In general, the higher the proportion of bicomponent fiber, the stronger and denser the finished product. The remainder of the web consists of cotton regin and, in some embodiments, includes one or more layers of scrim or netting.

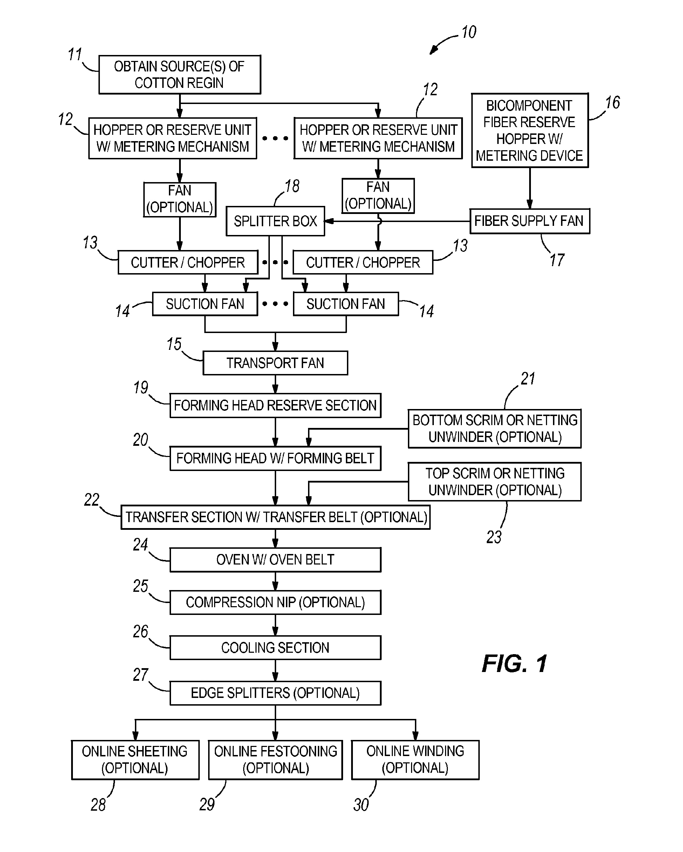

Fig. 1 illustrates a process 10 for manufacturing a product, such as, for example, an absorbent, including a dry-laid, thermally bonded web of cotton ginning byproducts (such as cotton regin) combined with bicomponent fiber. The process 10 begins at step or block 11 in which cotton regin is obtained from one or more source(s) and then loaded into one or more reserve hoppers (blocks 12). The cotton regin is then metered at a controlled rate from the one or more reserve hoppers (blocks 12) into one or more devices used to chop or cut the cotton regin (blocks 13). The devices (block 13) are hereinafter referred to as cutters, and are capable of at least cutting the cotton regin to a desired length.

Bicomponent fiber is stored in and metered at a controlled rate from a reserve hopper (block 16) into a fiber supply fan (block 17), which introduces the bicomponent fiber into the inlet of one or more cutters (blocks 13). The bicomponent fiber is mixed with the cotton regin in the after the cutter and the cotton regin is cut to length. A single bicomponent supply fan (block 17) may be used for multiple cutters (blocks 13) by means of an intermediate splitter box (block 18) by which the stream of bicomponent fiber is divided roughly equally for each of the individual branches supplying said fiber to the cutters. The mixed combination of processed cotton regin and bicomponent fiber is moved with pneumatic assistance provided by respective suction fans (blocks 14).

In some embodiments, the method includes multiple reserve hoppers (blocks 12), and each hopper feeds cotton regin at a metered rate into a separate cutter (blocks 13). Each cutter is coupled to a separate suction fan (blocks 14) by which the mixed and processed web material is pneumatically conveyed to a single transport fan (block 15). The use of multiple equipment lineups, as described in this embodiment, offers a number of practical and operational advantages over a single lineup (each lineup including one hopper (block 12), one cutter (block 13) and one suction fan (block 14)). For example, the process is less dependent on the performance or uptime of a single piece of equipment, and the use of multiple hoppers (blocks 12) offers the opportunity to blend different grades of cotton regin at controlled rates. Also, the use of a single lineup, as described above, often requires much larger equipment to handle the total required throughput of processed web material and often requires a considerably more powerful and aggressive cutter (blocks 13) to perform the total amount of work required to sufficiently reduce the cotton regin to a range of sizes suitable for web formation.

The transport fan (block 15) conveys the processed web material to the forming head chute or reserve section (block 19). The reserve section (block 19), situated on top of the forming head (block 20), meters web material at a controlled rate into the forming head.

The forming head (block 20) disperses and deposits the web material over a defined area of the advancing forming belt (included in block 20) to gradually form the pre-bonded web. A forming head suitable for use in making the web is described in U.S. Patent No. 7,627,933, the contents of which are hereby incorporated by reference.

If desired for inclusion in the end product (e.g., an absorbent), a bottom layer of scrim is unwound from a first unwinder (block 21) and carried under the forming head on top of the forming belt. The web is then formed on top of the bottom scrim.

In addition or as an alternative to a bottom scrim, netting may be included in the end product. To so form the end product, a layer of netting is unwound from a first unwinder (block 21) and carried under the forming head and, for some distance while under the forming head, above the forming belt. Some amount of web material (the cotton regin and bicomponent fibers) falls through the netting, causing the netting to become at least partially embedded within the web material.

A top scrim may be included in the end product by unwinding the scrim from a second unwinder (block 23) and carrying it on top of the web either while the web is still on the forming belt after the forming head or while the web transitions from the forming belt (included in block 20) to a transfer belt (included in block 22), which leads to another station such as an oven.

The bottom scrim, the netting, and the top scrim can be utilized in combination or individually, to enhance the strength and/or durability of the web. The netting could also be provided adjacent a top surface or be fully embedded within the web.

In some embodiments, scrim and netting are omitted completely. In a first alternative, cotton regin and bicomponent fiber are formed into a web, albeit one that is weaker than a web with netting or a scrim.

In a second alternative, loose material (i.e., cotton regin or cotton regin mixed with bicomponent fiber is collected from the forming head without being deposited on a forming wire or belt. Such loose material can be sprinkled on a spill and then later swept or vacuumed up. The loose material may also be placed or stuffed in a container such as a cotton or acrylic sock. The sock can be placed along the perimeter of an area to help contain a spill.

The optional transfer section (block 22) transfers the web from the forming belt to the oven belt (included in block 24). The web is conveyed from the transfer section (block 22) to the oven (block 24), where it is heated sufficiently to cause the melting or softening of the polyethylene in the individuated bicomponent fibers and, optionally, in the scrim layer(s). Molten or softened polyethylene in contact with other fibers in the web creates bonds when the polyethylene is cooled and hardened. As the web exits the oven, it may be taken through an optional compression nip (block 25) in order to squeeze the web for the purpose of encouraging thermal bonds and possibly to intentionally reduce the bulk of the finished product. The web is then cooled in a cooling section (block 26) in order to set the thermal bonds.

Different methods and devices for online converting may be employed to produce the desired form of a finished product. Fig. 1 illustrates a number of possible alternatives, including an edge slitter (block 27) for trimming the edges of the web to a fixed width. As illustrated, after the edge slitter (block 27), converting alternatives may be provided for sheeting (block 28), festooning (block 29), winding (block 30), etc., the finished web. These optional steps can be utilized in combination with each other or can be omitted completely.

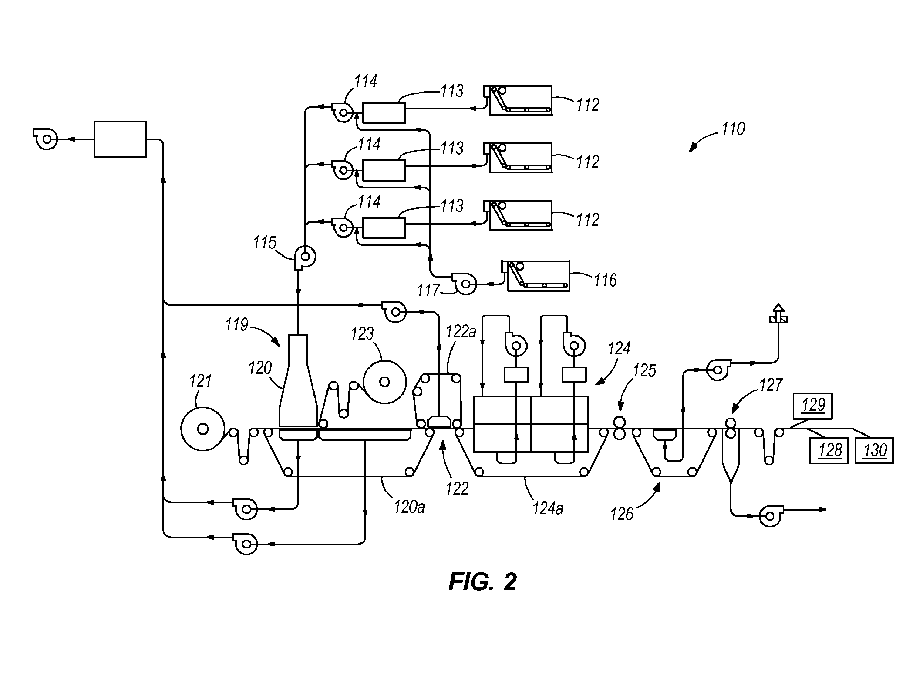

Fig. 2 is a schematic view of the manufacturing line 110 for the process 10 shown in Fig. 1 and described above. In Fig. 2, structure of the manufacturing line 110 corresponding to a step or block in the flow chart of Fig. 1 has the same reference number in the "100" series.

In the manufacturing line 110, cotton regin is obtained from one or more source(s) and then loaded into one or more reserve hoppers 112. The cotton regin is then metered at a controlled rate from the one or more reserve hoppers 112 into one or more devices 113 used to open, shred and clean the cotton fiber. In the illustrated embodiment, three reserve hoppers 112 and three associated devices 113 are utilized, but, it should be understood that other numbers of reserve hoppers 112 and respective devices 113 are possible.

Bicomponent fiber is stored in and metered at a controlled rate from a reserve hopper 116 into a fiber supply fan 117, which introduces the bicomponent fiber into the inlet of one or more cutters 113. The bicomponent fiber is therein mixed with the cotton regin as the cotton fibers are reduced in length (chopped/cut to length of between about 1 mm and about 6 mm). A single bicomponent supply fan 117 may be used for multiple cutters 113 by means of an intermediate splitter box (block 18, see Fig. 1) by which the stream of bicomponent fiber is divided roughly equally for each of the individual branches supplying the bicomponent fiber to the cutters 113. The mixed combination of processed cotton regin and bicomponent fiber exits the cutters 113 with pneumatic assistance provided by respective suction fans 114.

In the illustrated embodiment, the manufacturing line 110 includes multiple reserve hoppers 112, and each hopper 112 feeds cotton regin at a metered rate into a separate associated cutter 113. Each cutter 113 is coupled to a separate associated suction fan 114 by which the mixed and processed web material is pneumatically conveyed to a single transport fan 115.

The transport fan 115 conveys the processed web material to the forming head chute or reserve section 119. The reserve section 119, situated on top of the forming head 120, meters web material at a controlled rate into the forming head 120. The forming head 120 disperses and deposits the web material over a defined area of the advancing forming belt 120*a* to gradually form the pre-bonded web. A forming head 120 suitable for use in making the web is described in U.S. Patent No. 7,627,933, as discussed above.

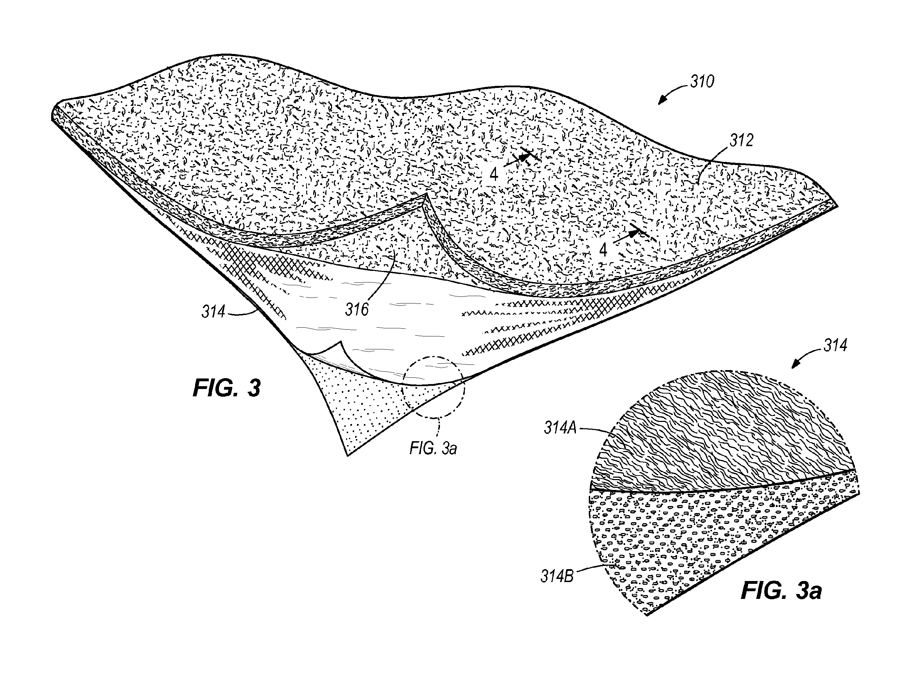

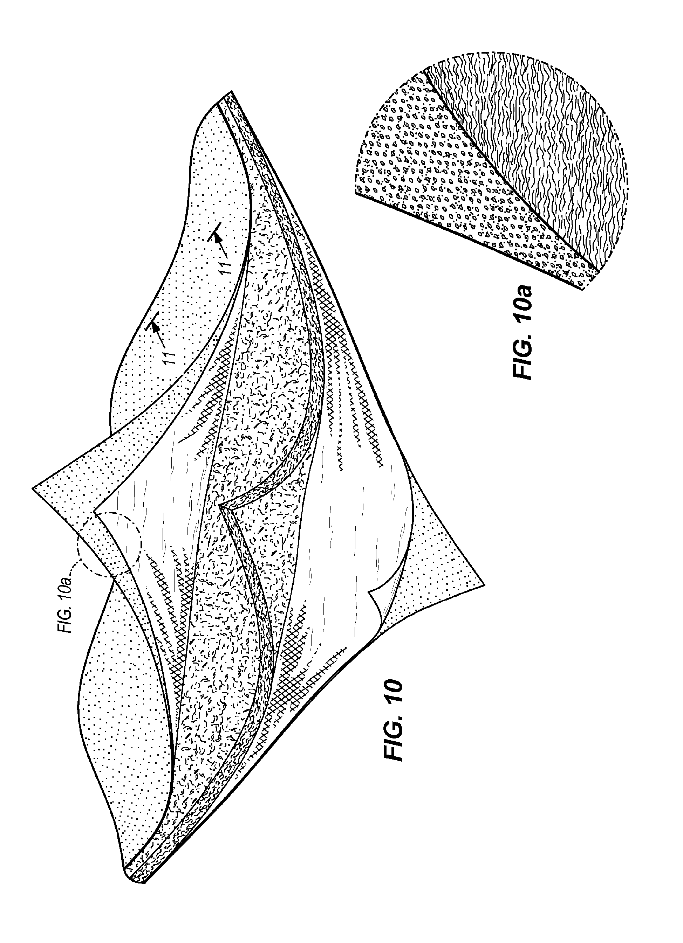

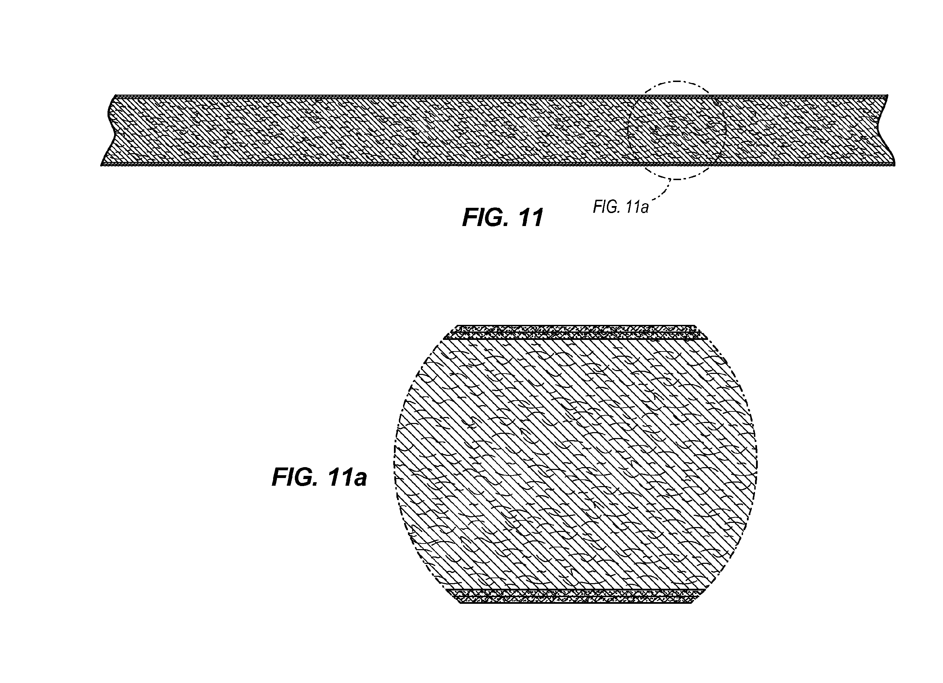

As noted above, the web can be formed with a netting, a bottom scrim, a top scrim, or a combination of these elements. If included in the end product, a bottom layer of scrim 314 (Fig. 3) is unwound from a first unwinder 121 and carried under the forming head on top of the forming belt 120*a*. The web is then formed on top of the bottom scrim 314. Figs. 10, 10a, 11, and 11a, illustrate embodiments with top and bottom scrims.

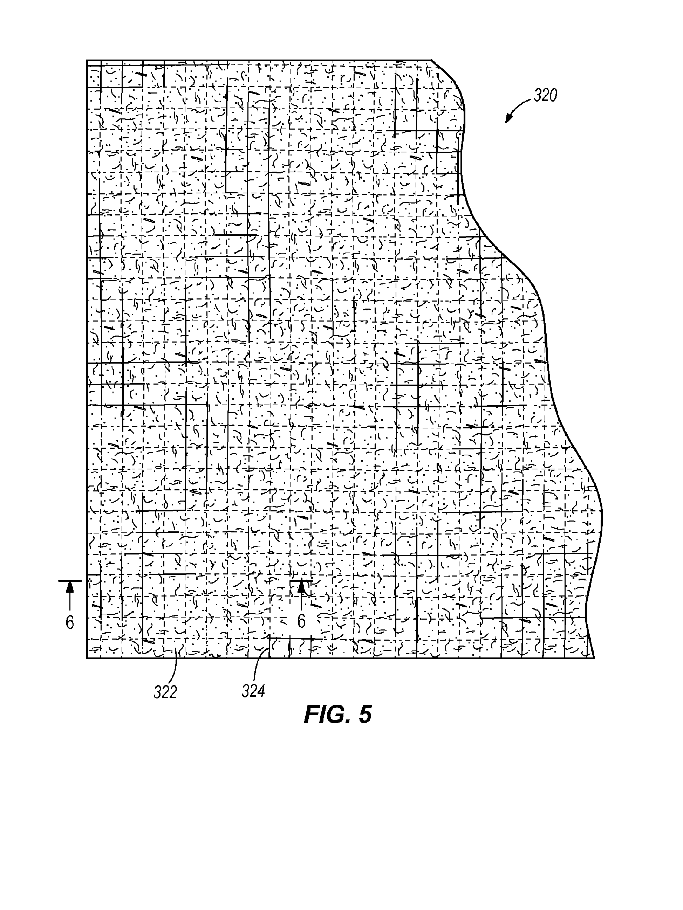

Netting, which is discussed in further detail below, may be placed in the end product by unwinding it from the first unwinder 121. The netting is carried under the forming head 120 and, for some distance while under the forming head 120, above the forming belt 120*a*. Some amount of web material thereby falls through the netting 324, 344 (FIGS. 5-6 and 8-9), causing the netting 324, 344 to become embedded (at least partially) within the web material.

To include the top scrim 314, the scrim is unwound from a second unwinder 123 and carried on top of the web either while the web is still on the forming belt 120*a* after the forming head 120 or while the web transitions from the forming belt 120*a* to the transfer belt 122*a*.

The transfer section 122 transfers the web from the forming belt 120*a* to the oven belt 124*a* via the transfer belt 112*a*. The web is conveyed from the transfer section 122 to the oven 124, where it is heated sufficiently to cause the melting or softening of the polyethylene in the individuated bicomponent fibers and, optionally, in the scrim layer(s). Molten or softened polyethylene in contact with other fibers in the web creates bonds when the polyethylene is cooled and hardened. As the web exits the oven 124, it may be taken through an optional compression nip roller 125 in order to squeeze the web for the purpose of encouraging thermal bonds and possibly to intentionally reduce the bulk of the finished product. The web is then cooled in a cooling section 126 in order to set the thermal bonds.

Fig. 2 illustrates a number of possible alternatives for converting the web into desired forms and sizes. An edge slitter 127 may be used for trimming the edges of the web to a fixed width. After the edge slitter 127, converting alternatives may be provided by using a sheeter 128, festooner 129, winder 130, or other devices to cut, stack, fold, or wind the web.

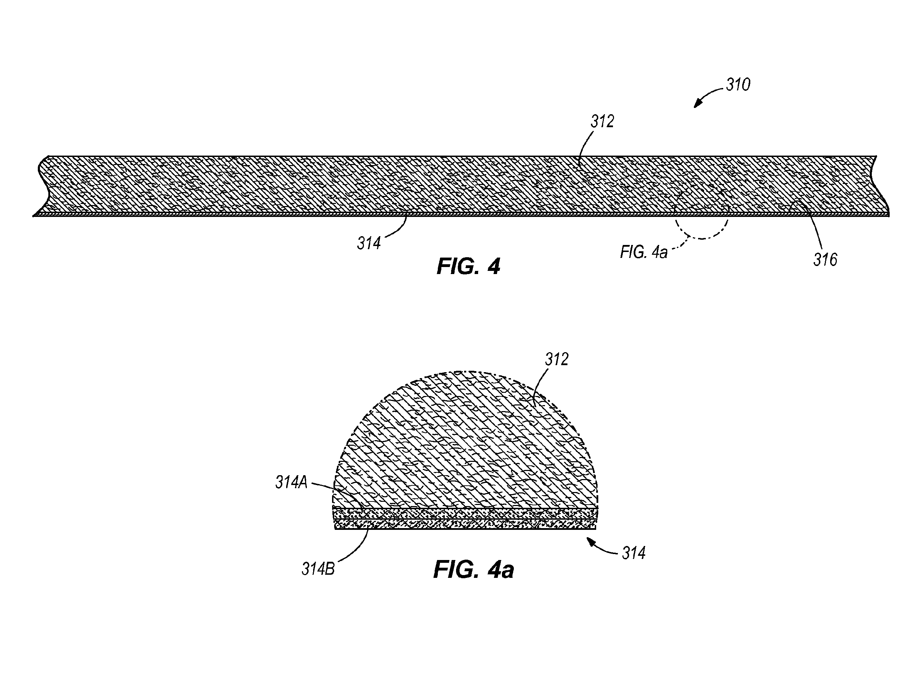

Figs. 3, 3a, 4 and 4a show a pad 310 that includes a web of cotton regin and bicomponent fibers 312 and a scrim 314.

Figs. 3 and 4 show a pad 310 (or industrial absorbent) that includes a core of cotton ginning byproducts and bicomponent fiber 312 and a scrim 314. The scrim includes a first layer 314A made of first material. As noted above, the first material is most preferably a sheet of spunbond bicomponent fibers. The scrim 314 also has a second layer 314B made of second material. As noted above, the second layer is most preferably a sheet of meltblown polypropylene.

A scrim made of a single layer of material is, in most cases, translucent and, while never as transparent as, for example, window glass, in some cases, almost transparent. In contrast, the scrim 314, while letting some light to pass through, is generally opaque. The opaque nature of the scrim 314 offers aesthetic advantages to the pad 310.

There are number of different ways in which the scrim 314 may be made. However, one technique involves manufacturing the first sheet or layer 314A using spunbond techniques and separating manufacturing the second sheet or layer 314B using meltblown techniques. The two layers are then thermo-calendered together and wound on a roll. The scrim 314 (as a laminate) is then unrolled and secured to a surface 316 of the pad 310. The scrim 314 can be positioned under the cotton regin and bicomponent fiber 312, such as in step 21, or can be positioned above the cotton regin and bicomponent fiber 312, such as in step 23. As discussed above, in other constructions (not shown), the product can include a scrim layer on both surfaces of the web. Generally, the scrim 314 increases the strength and/or scuff resistance of the pad 310 without substantially decreasing the absorbent and insulating properties of the pad 310.

When the pad 310 travels through the oven 124, the outer layer of the bicomponent fibers 312 partially melts and also adheres to the scrim 314, to secure the scrim 314 to the pad 310. In another construction, the scrim 314 has a melting point chosen so that it partially melts in the oven 124 to adhere to fibers in the web.

If additional assurance of bonding is desired, the scrim 314 is pressed against the pad 310 by the nip roller 125 after being heated in the oven.

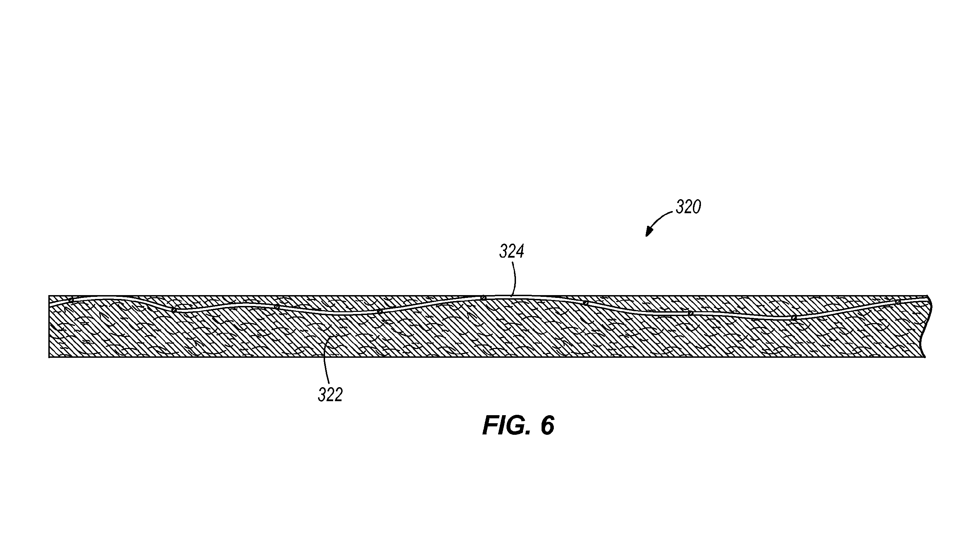

Figs. 5 and 6 show an alternative pad 320, such as an absorbent, that includes a web of cotton regin and bicomponent fibers 322 and netting 324. As mentioned above, netting may be incorporated in an end product (e.g., pad 320) by unrolling the netting 324 from the first unwinder 121 and holding the netting above the forming belt 120*a* for a distance (see Fig. 2), such that some of the cotton regin and bicomponent fiber 322 fall through the netting 324. The netting 324 is then lowered onto the forming belt 120*a* and onto any cotton regin and bicomponent fiber 322 that has fallen through the netting 324. Thus, as shown in Figs. 5 and 6, the netting 324 is at least partially embedded in the web material.

For example, in the embodiment shown in Fig. 5, the pad 320 includes relatively few areas where the netting 324 is visible on a top surface 326 of the pad. The pad 320 also includes many areas where the netting 324 is not visible on the top surface 326 (as is shown by phantom lines).

In other constructions, the netting 324 can be embedded in the web material to a greater or lesser extent, depending upon, among other things, the size of netting 324 used and the average particle size of the cotton regin and bicomponent fiber 322. In some embodiments, the netting 324 is embedded between 0% and 25% of the thickness of the pad 320. In some embodiments, the netting 324 is embedded between 0% and 50% of the thickness of the pad 320. In some embodiments, the netting 324 is substantially positioned in a middle of the pad 320.

In another construction (not shown), the netting 324 may be fully embedded into the pad 320, such that the netting 324 is not visible through the cotton regin and bicomponent fiber 322. In yet another construction (not shown), netting 324 may be included on both a top and a bottom of the pad 320. Further, in another construction (not shown), the netting 324 may have adhesive properties and/or may soften or melt when the pad 320 is sent through the oven 124 to at least partially bond with the web material.

The pad 320 is directed through the oven 124, as described above. The outer layer of the individuated bicomponent fibers 322 melts in the oven 124 and bonds with the cotton regin fibers. In the illustrated construction, the netting 324 does not have any adhesive properties, nor does the illustrated netting 324 melt in the oven 124. Rather, the netting 324 is secured to the pad 320 because the netting 324 is at least partially embedded in the web material. The cotton regin and bicomponent fiber 322 is positioned on opposite sides of the netting 324 when the pad 320 is sent through the oven 124 so that the web material forms bonds around the netting 324. A nip roller 125 can be used to compress the pad 320, and further secure the netting 324 to the cotton regin and bicomponent fibers 322. The netting 324 increases the strength of the pad 320, without significantly decreasing the absorbency and/or insulation properties of the pad 320.

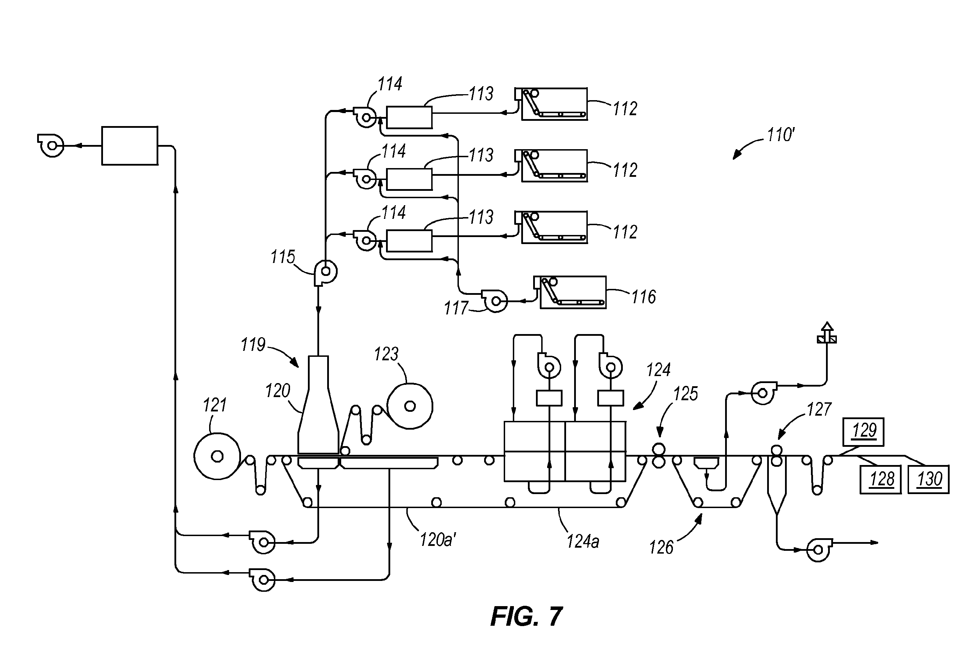

Fig. 7 is schematic view of an alternate manufacturing line 110' that can be utilized to manufacture the absorbents or similar products in accordance with the present invention. The manufacturing line 110' is similar to the manufacturing line 110, so only the different components will be indicated with a prime (') and discussed in detail. The manufacturing line 110' omits the transfer section 122 and includes a single forming/oven belt 120a' that extends through the reserve section 119 and the oven 124. In the illustrated embodiment, the web is formed on the belt 120a' and transferred directly into the oven 124 without the need of a transfer section. All of the features and components from Fig. 2 not specifically discussed with respect to Fig. 7 can be utilized with the embodiment of Fig. 7.

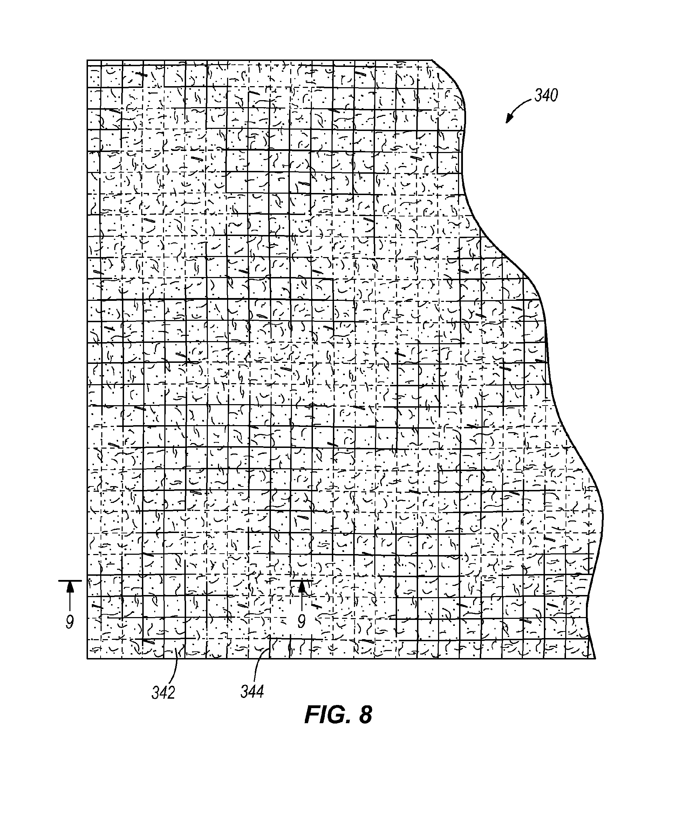

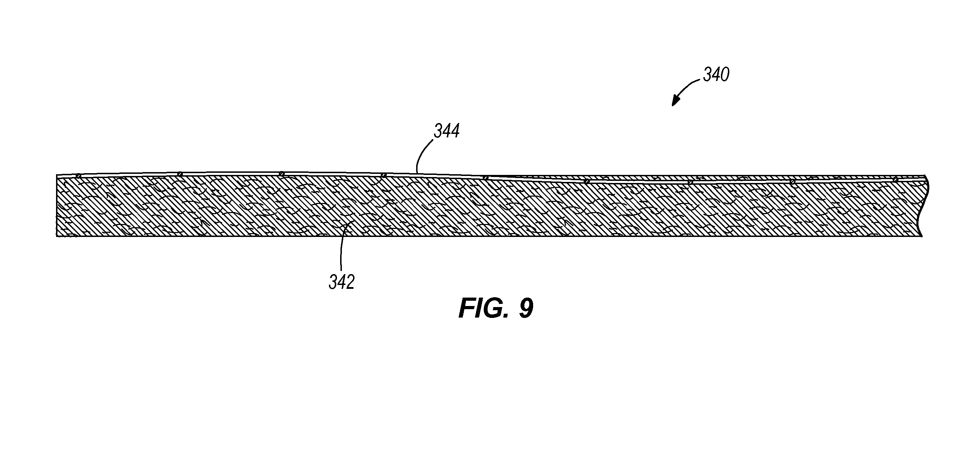

Figs. 8 and 9 show a pad 340, such as an absorbent that includes a web of cotton regin and bicomponent fibers 342 and netting 344. As mentioned above, netting may be incorporated in an end product (e.g., pad 340) by unrolling the netting 344 from the first unwinder 121 and holding the netting above the forming belt 120*a* for a distance (see Fig. 2), such that some of the cotton regin and bicomponent fiber 342 fall through the netting 344. The netting 344 is then lowered onto the forming belt 120*a* and onto any cotton regin and bicomponent fiber 342 that has fallen through the netting 344. Thus, the netting 344 is at least partially embedded in the web material.

For example, in the embodiment shown in Fig. 8, the pad 340 includes multiple areas 345 where the netting 344 is visible on a top surface 346 of the pad. The pad 340 also includes multiple areas 307 where the netting 344 is not visible on the top surface 346 (as is shown by phantom lines). In other constructions, the netting 344 can be embedded in the web material to a greater or lesser extent, depending upon, among other things, the size of netting 344 used and the average particle size of the cotton regin and bicomponent fiber 342.

The pad 340 is directed through the oven 124, as described above. The outer layer of the individuated bicomponent fibers 342 melts in the oven 124 and bonds with the cotton regin fibers. In the illustrated construction, the netting 344 does not have any adhesive properties, nor does the illustrated netting 344 melt in the oven 124. Rather, the netting 344 is secured to the pad 340 because the netting 344 is at least partially embedded in the web material. The cotton regin and bicomponent fiber 342 is positioned on opposite sides of the netting 344 when the pad 340 is sent through the oven 124 so that the web material forms bonds around the netting 344. A nip roller 125 can be used to compress the pad 340, and further secure the netting 344 to the cotton regin and bicomponent fibers 342. The netting 344 increases the strength of the pad 340, without significantly decreasing the absorbency and/or insulation properties of the pad 340.

In another construction (not shown), the netting 344 may be fully embedded into the pad 340, such that the netting 344 is not visible through the cotton regin and bicomponent fiber 342. In yet another construction (not shown), netting 344 may be included on both a top and a bottom of the pad 340. Further, in another construction (not shown), the netting 344 may have adhesive properties and/or may soften or melt when the pad 340 is sent through the oven 124 to at least partially bond with the web material.

As should be apparent from the above, independent embodiments of the invention provide webs for use, for example, as industrial hydrophobic absorbents, and methods of manufacturing the same. Various features, advantages, and embodiments of the invention are set forth in the following claims:

## Claims

1. A non-woven product for use as an industrial absorbent, the product comprising:
a non-woven web core, the core having a first surface, a second surface opposite the first surface, and a mixture of cotton ginning byproducts and thermoplastic bonding agent preferably comprising bicomponent fibers, wherein at least some of the thermoplastic bonding agent being thermally bonded to the cotton ginning byproducts;
a two-layer scrim which is preferably air permeable, the scrim having a first layer of spunbond bicomponent fibers and a second layer including meltblown material.

2. The non-woven product of claim 1, wherein the first layer of the scrim is thermally bonded to either the first surface or the second surface of the core, and the scrim is positioned so that the second layer is positioned at an outer surface of the absorbent.

3. The non-woven product of claim 1 or claim 2, wherein the amount of bicomponent fiber included in the core is between 6% and 12% of a total weight of the core and/or the core has a bulk-to-weight ratio of about 25 to about 40 mils/osy.

4. The non-woven product of any one of the preceding claims, wherein the second layer is formed from polypropylene.

5. The non-woven product of any one of the preceding claims, wherein the first layer of the scrim has a coefficient of friction and the second layer has a coefficient of friction that is greater than the coefficient of friction of the first layer.

6. The non-woven product of any one of the preceding claims, further comprising a second scrim thermally bonded to the core opposite the two-layer scrim.

7. The non-woven product of any one of the preceding claims, further comprising a netting at least partially embedded within the core.

8. The non-woven of any one of the preceding claims, wherein the core has an absorbency of about 20 to about 30 times a dry weight of the core.

9. The non-woven product as claimed in claim 1, wherein the second layer is embossed.

10. The non-woven product as claimed in any one of the preceding claims, wherein the first layer of the scrim is bonded to the core and to the second layer of the scrim.

11. The non-woven product as claimed in any one of the preceding claims, wherein the first layer of the scrim has a melting point, and the second layer of the scrim has a melting point, and the melting points of each of the first and second layers are the same as a melting point of the thermoplastic bonding agent.

12. A method of manufacturing a non-woven product for use as an industrial absorbent, the method comprising:
mixing cotton ginning byproducts and bicomponent fibers to form a non-woven web core having a first surface and a second surface opposite the first surface;
forming a first layer of spunbond material;
forming a second layer of meltblown material separately from the first layer of spunbond material;
positioning the first layer of spunbond material on the second layer of meltblown material to form a two-layer scrim;
positioning one of the non-woven web core and the two-layer scrim on the other of the non-woven web core and the two-layer scrim so that the first layer of spunbond material contacts either the first surface or the second surface of the core and the second layer of meltblown material forms an outer surface; and
heating the non-woven web core and the two-layer scrim to thermally bond the cotton ginning byproducts, the bicomponent fibers, the first layer, and the second layer together.

13. The method of claim 12, wherein heating the non-woven web core and the two-layer scrim includes melting the bicomponent fibers to bond the bicomponent fibers to the cotton ginning byproducts and to the first layer of the two-layer scrim, preferably wherein the first layer of spunbond material includes bicomponent fibers, and wherein heating the non-woven web core and the two-layer scrim includes melting the bicomponent fibers of the first layer to bond the first layer to the non-woven web core and to the second layer.

14. The method of claim 12 or claim 13, wherein positioning the first layer of spunbond material on the second layer of meltblown material includes calendaring the first layer and the second layer together to form the two-layer scrim.

15. The method of any one of claim 12 to claim 14, further comprising compressing the non-woven web core and the two-layer scrim after the cotton ginning byproducts, the bicomponent fibers, the first layer, and the second layer are thermally bonded together.
